# EUROPÄISCHE PATENTSCHRIFT

(11) **EP 4 619 777 B1**
(45) Veröffentlichungstag und Bekanntmachung des Hinweises auf die Patenterteilung: **30.09.2026**
(21) Anmeldenummer: 23798426.5
(22) Anmeldetag: 26.10.2023
(51) Int. Cl.: G01S 7/497, G01S 17/08, G01S 17/931, G01S 17/42

(54) **VORRICHTUNG UND VERFAHREN ZUR KALIBRIERUNG EINER SCANEBENE EINES LASERSCANNERS**
DEVICE AND METHOD FOR CALIBRATING A SCANNING PLANE OF A LASER SCANNER
DISPOSITIF ET PROCÉDÉ D'ÉTALONNAGE D'UN PLAN DE BALAYAGE D'UN SCANNER LASER

(30) Priorität: 14.11.2022 DE 102022004213
(43) Veröffentlichungstag der Anmeldung: 24.09.2025
(73) Patentinhaber: SEW-EURODRIVE GmbH & Co. KG, 76646 Bruchsal (DE)
(72) Erfinder: SLISKOVIC, Maja, 76275 Ettlingen (DE); STÜRMLINGER, Lukas, 76698 Ubstadt-Weiher (DE)
(86) Internationale Anmeldenummer: PCT/EP2023/079964
(87) Internationale Veröffentlichungsnummer: WO 2024/104757

(56) Entgegenhaltungen:
- EP-A2- 1 615 047
- WO-A1-2022/152463
- US-A1- 2022 342 055

## Beschreibung

Es wird eine Vorrichtung zur Kalibrierung einer Scanebene eines Laserscanners, insbesondere zur Kalibrierung einer Scanebene eines Laserscanners eines Fahrzeugs, welche mehrere Reflexionseinheiten zur Reflexion eines Laserstrahls des Laserscanners beschrieben. Weiter wird auch ein Verfahren zur Kalibrierung einer Scanebene eines Laserscanners beschrieben.

Es sind Fahrzeuge, insbesondere autonom fahrende Fahrzeuge, wie beispielsweise selbstfahrende mobile Transportsysteme, bekannt, welche einen oder mehrere Laserscanner aufweisen. Solche mobilen Transportsysteme dienen beispielsweise zum Transport von Gegenständen innerhalb einer technischen Anlage. Bei der technischen Anlage handelt es sich insbesondere um eine industrielle Anwendung, beispielsweise ein Produktionswerk. Ein Laserscanner sendet einen Laserstrahl aus, detektiert einen reflektierten Laserstrahl und berechnet daraus eine Entfernung zu einem Objekt, das den Laserstrahl reflektiert. Ein Laserscanner dient dem autonom fahrenden Fahrzeug insbesondere dazu, Hindernisse in der technischen Anlage zu erkennen.

Der Laserscanner des Fahrzeugs sollte derart ausgerichtet sein, dass von dem Laserscanner ausgesandte Laserstrahlen möglichst parallel zu einem Boden, auf welchem das Fahrzeug sich befindet, verlaufen. Damit wird erreicht, dass die Laserstrahlen nicht von dem Boden reflektiert werden, sondern von Objekten, insbesondere Hindernissen, in der Umgebung. Solche Objekte sind dann für die Lokalisierung oder Ortung und die Navigation des Fahrzeugs verwendbar. Die Laserstrahlen eines Laserscanners liegen in einer Scanebene. Eine Ausrichtung des Laserscanners derart, dass die Scanebene parallel zu einem Boden, also horizontal, verläuft, gehört zu einer Kalibrierung des Laserscanners.

Aus der DE 10 2004 033 114 A1 ist ein Verfahren zur Kalibrierung eines Abstandsbildsensors bekannt. Dazu wird eine Vorrichtung verwendet, die Kalibrierobjekte mit drei Kalibrierflächen aufweist.

Die DE 101 16 278 A1 offenbart ein Verfahren zum Abgleich eines an einem Fahrzeug angeordneten Abstandssensors. Dazu wird eine Vorrichtung verwendet, die drei Referenzobjekte aufweist.

Aus der CN 111366912 A sind eine gattungsgemäße Vorrichtung zur Kalibrierung eines Laserscanners sowie ein gattungsgemäßes Verfahren zur Kalibrierung eines Laserscanners bekannt.

Aus der EP 1 615 047 A2 ist ein Verfahren zur Kalibrierung eines optischen Abstandssensors an einem Fahrzeug bekannt. Dabei werden mittels eines Abstandsbildsensors Abstände zwischen dem Abstandsbildsensor und Bereichen auf wenigstens einer Kalibrierfläche ermittelt. Aus der WO 2022/152463 A1 ist ein Verfahren zur Kalibrierung eines Laserscanners eines Fahrzeugs bekannt. Eine Ausrichtung des Laserscanners wird überprüft, indem ein Laserstrahl auf eine Reflexionseinheit gerichtet wird, und der Laserstrahl entlang der Reflexionseinheit bewegt wird.

Aus der US 2022/0342055 A1 ist ein System zur Erkennung einer Position und einer Ausrichtung eines an einem Fahrzeug montierten Detektors bekannt.

Es liegt die Aufgabe zugrunde, eine Vorrichtung und ein Verfahren zur Kalibrierung einer Scanebene eines Laserscanners zu schaffen.

Die Aufgabe wird durch eine Vorrichtung zur Kalibrierung einer Scanebene eines Laserscanners mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zur Kalibrierung einer Scanebene eines Laserscanners mit den in Anspruch 6 angegebenen Merkmalen gelöst. Vorteilhafte Ausgestaltungen und Weiterbildungen sind Gegenstand der Unteransprüche.

Eine erfindungsgemäße Vorrichtung zur Kalibrierung einer Scanebene eines Laserscanners, insbesondere zur Kalibrierung einer Scanebene eines Laserscanners eines Fahrzeugs, umfasst mehrere Reflexionseinheiten zur Reflexion eines Laserstrahls des Laserscanners. Die Reflexionseinheiten weisen dabei jeweils eine einer Bezugsachse zugewandte Reflexionsfläche auf, wobei die Bezugsachse in einer Vertikalrichtung verläuft. Auf jeder der Reflexionsflächen sind jeweils Markierungen zur Darstellung einer Auftreffhöhe eines Laserstrahls in Vertikalrichtung angebracht. Die erste Reflexionsfläche und die dritte Reflexionsfläche sind dabei rechtwinklig zu einer Querrichtung orientiert, und die zweite Reflexionsfläche ist rechtwinklig zu einer Längsrichtung orientiert.

Die Längsrichtung verläuft dabei rechtwinklig zu der Vertikalrichtung. Die Querrichtung verläuft rechtwinklig zu der Vertikalrichtung und rechtwinklig zu der Längsrichtung. Die Vorrichtung gestattet eine sehr präzise Kalibrierung einer Scanebene eines Laserscanners. Dabei erfordert die Vorrichtung nur einen verhältnismäßig geringen Platzbedarf.

Die Vorrichtung weist eine erste Kamera, welche auf die erste Reflexionsfläche gerichtet ist, eine zweite Kamera, welche auf die zweite Reflexionsfläche gerichtet ist, und eine dritte Kamera, welche auf die dritte Reflexionsfläche gerichtet ist, auf. Die Kameras gestatten eine präzisere Erkennung der Auftreffhöhen von Laserstrahlen und damit eine noch präzisere Kalibrierung der Scanebene des Laserscanners.

Die Kameras sind dazu eingerichtet, Strahlen in einem Wellenlängenbereich zu detektieren, in dem die Laserstrahlen des Laserscanners liegen. Beispielsweise sind die Kameras als Infrarotkameras ausgebildet.

Gemäß einer vorteilhaften Weiterbildung sind die Reflexionseinheiten an einem Gestell fixiert. Dabei sind die Reflexionseinheiten relativ zueinander sowie relativ zu dem Gestell unbeweglich. Dadurch sind Unebenheiten eines Bodens, auf welchem die Vorrichtung angeordnet ist, weitgehend eliminierbar. Ferner ist die Vorrichtung einfach transportabel, wodurch die Kalibrierung beispielsweise in Kundenanlagen ausführbar ist.

Gemäß einer vorteilhaften Ausgestaltung der Erfindung sind die Reflexionsflächen in einem gleichen oder zumindest annähernd gleichen Abstand zu der Bezugsachse angeordnet. Durch diese definierte Anordnung der Reflexionsflächen sind die Wiederholgenauigkeit sowie die Prozesssicherheit bei der Durchführung von Kalibrierungen verbessert.

Gemäß einer bevorzugten Ausgestaltung der Erfindung verläuft die Bezugsachse zwischen der ersten Reflexionsfläche und der dritten Reflexionsfläche.

Gemäß einer vorteilhaften Weiterbildung fluchtet eine erste Bezugsrichtung von der Bezugsachse zu der ersten Reflexionsfläche mit einer dritten Bezugsrichtung von der Bezugsachse zu der dritten Reflexionsfläche, und eine zweite Bezugsrichtung von der Bezugsachse zu der zweiten Reflexionsfläche steht rechtwinklig zu der ersten Bezugsrichtung. Es wird auch ein Verfahren zur Kalibrierung einer Scanebene eines Laserscanners, insbesondere zur Kalibrierung einer Scanebene eines Laserscanners eines Fahrzeugs, mittels einer Vorrichtung vorgeschlagen. Dabei wird zunächst die Vorrichtung relativ zu dem Laserscanner derart ausgerichtet, dass die Bezugsachse einen Mittelpunkt des Laserscanners schneidet oder zumindest in unmittelbarer Nähe des Mittelpunkts verläuft. Dann werden Laserstrahlen des Laserscanners auf die Reflexionsflächen der Reflexionseinheiten gerichtet. Anschließend werden Auftreffhöhen der Laserstrahlen auf die Reflexionsflächen in Vertikalrichtung ermittelt. Wenn die ermittelten Auftreffhöhen der Laserstrahlen auf die Reflexionsflächen in Vertikalrichtung sich unterscheiden, so wird eine Justierung des Laserscanners durchgeführt.

Das Verfahren ermöglicht auf einfache Art eine präzise Kalibrierung einer Scanebene eines Laserscanners eines Fahrzeugs in horizontaler Richtung. Bei dem Fahrzeug handelt es sich insbesondere um ein autonom fahrendes Fahrzeug, wie beispielsweise ein selbstfahrendes mobiles Transportsystem. Mittels des Laserscanners ist das autonom fahrende Fahrzeug insbesondere dazu in der Lage, Hindernisse zu erkennen. Das Verfahren ermöglicht eine verhältnismäßig hohe Genauigkeit bei der Kalibrierung der Scanebene des Laserscanners und benötigt einen verhältnismäßig geringen Zeitaufwand. Auch ist nur ein verhältnismäßig geringer Platzbedarf erforderlich. Wenn der Laserscanner korrekt ausgerichtet ist, so verlaufen die Laserstrahlen parallel zu einem Boden sowie rechtwinklig zu der Vertikalrichtung, und die Auftreffhöhen der Laserstrahlen auf die Reflexionsflächen in Vertikalrichtung sind gleich.

Erfindungsgemäß wird eine erste Auftreffhöhe eines Laserstrahls auf die erste Reflexionsfläche in Vertikalrichtung von einer ersten Kamera, welche auf die erste Reflexionsfläche gerichtet ist, ermittelt; eine zweite Auftreffhöhe eines Laserstrahls auf die zweite Reflexionsfläche in Vertikalrichtung wird von einer zweiten Kamera, welche auf die zweite Reflexionsfläche gerichtet ist, ermittelt; und eine dritte Auftreffhöhe eines Laserstrahls auf die dritte Reflexionsfläche in Vertikalrichtung wird von einer dritten Kamera, welche auf die dritte Reflexionsfläche gerichtet ist, ermittelt. Die Kameras gestatten eine präzisere Erkennung der Auftreffhöhen von Laserstrahlen und damit eine noch präzisere Kalibrierung der Scanebene des Laserscanners.

Gemäß einer vorteilhaften Weiterbildung werden zur Ausrichtung der Vorrichtung relativ zu dem Laserscanner eine erste Entfernung des Mittelpunkts des Laserscanners zu der ersten Reflexionsfläche, eine zweite Entfernung des Mittelpunkts des Laserscanners zu der zweiten Reflexionsfläche und eine dritte Entfernung des Mittelpunkts des Laserscanners zu der dritten Reflexionsfläche gemessen. Die Vorrichtung wird dann relativ zu dem Laserscanner derart positioniert, dass die erste Entfernung, die zweite Entfernung und die dritte Entfernung gleich oder zumindest annähernd gleich sind. Dadurch sind die Wiederholgenauigkeit sowie die Prozesssicherheit bei der Durchführung von Kalibrierungen verbessert.

Gemäß einer vorteilhaften Weiterbildung werden die Entfernungen des Mittelpunkts des Laserscanners zu den Reflexionsflächen mittels Laserstrahlen des Laserscanners gemessen, welche von den Reflexionsflächen reflektiert werden. Laserscanner sind in der Lage, Entfernungen zu Gegenständen, insbesondere zu den Reflexionsflächen der Reflexionseinheiten, verhältnismäßig einfach und präzise zu messen. Die Verwendung von zusätzlichen Messgeräten ist somit nicht erforderlich.

Es zeigen:
- Figur 1:: eine schematische Draufsicht auf eine Vorrichtung zur Kalibrierung einer Scanebene eines Laserscanners und
- Figur 2:: eine schematische Frontansicht der Vorrichtung zur Kalibrierung einer Scanebene eines Laserscanners.

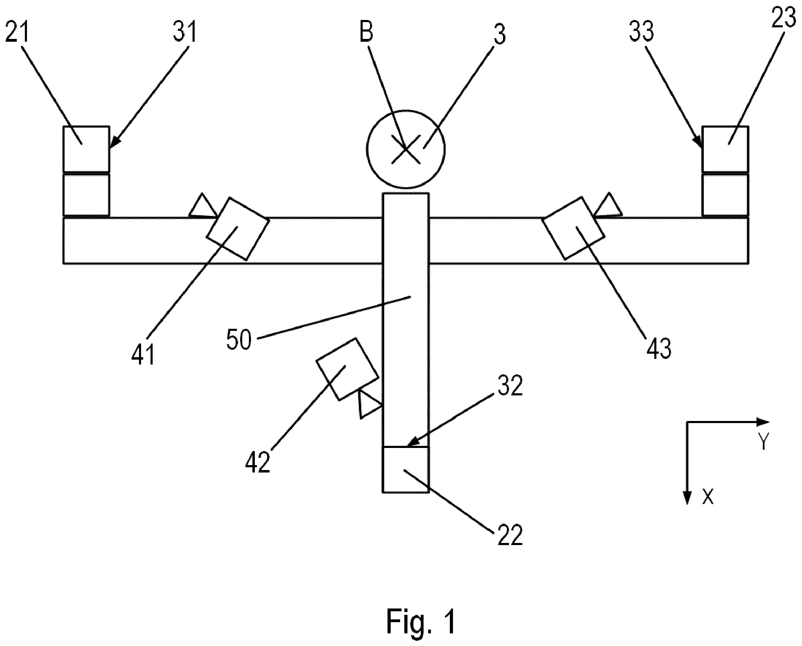

Figur 1 zeigt eine schematische Draufsicht auf eine Vorrichtung zur Kalibrierung einer Scanebene eines Laserscanners 3. Der Laserscanner 3 ist an einem hier nicht dargestellten Fahrzeug angebracht. Bei dem Fahrzeug handelt es sich vorliegend um ein autonom fahrendes Fahrzeug, insbesondere um ein selbstfahrendes mobiles Transportsystem. Das Fahrzeug weist einen annähernd rechteckigen Grundriss auf. Das nicht dargestellte Fahrzeug mit dem Laserscanner 3 befindet sich auf einem zumindest annähernd ebenen Boden.

An zwei diagonal gegenüberliegenden Ecken des Fahrzeugs ist jeweils ein Laserscanner 3 angeordnet. Jeder der Laserscanner 3 ist dazu eingerichtet, einen Laserstrahl auszusenden, einen reflektierten Laserstrahl zu detektieren, und daraus einen Abstand zu einem Objekt, das den Laserstrahl reflektiert, zu berechnen. Auch ist jeder der Laserscanner 3 dazu ausgebildet, einen Winkelbereich, in welchem sich das Objekt befindet, zu ermitteln.

Eine Vertikalrichtung Z verläuft rechtwinklig zu dem Boden. Eine Längsrichtung X verläuft rechtwinklig zu der Vertikalrichtung Z und parallel zu dem Boden. Eine Querrichtung Y verläuft rechtwinklig zu der Vertikalrichtung Z und rechtwinklig zu der Längsrichtung X und parallel zu dem Boden. Jede Richtung, die rechtwinklig zu der Vertikalrichtung Z verläuft, stellt eine horizontale Richtung dar.

Die Vorrichtung umfasst eine erste Reflexionseinheit 21 zur Reflexion eines Laserstrahls L des Laserscanners 3, eine zweite Reflexionseinheit 22 zur Reflexion eines Laserstrahls L des Laserscanners 3 und eine dritte Reflexionseinheit 23 zur Reflexion eines Laserstrahls L des Laserscanners 3.

Die Reflexionseinheiten 21, 22, 23 sind an einem Gestell 50 fixiert. Dabei sind die Reflexionseinheiten 21, 22, 23 relativ zueinander sowie relativ zu dem Gestell 50 unbeweglich. Das Gestell 50 steht ebenfalls auf dem Boden. Die Reflexionseinheiten 21, 22, 23 sind quaderförmig ausgebildet und ragen in Vertikalrichtung Z von dem Boden weg.

Die erste Reflexionseinheit 21 weist eine erste Reflexionsfläche 31 auf. Die zweite Reflexionseinheit 22 weist eine zweite Reflexionsfläche 32 auf. Die dritte Reflexionseinheit 23 weist eine dritte Reflexionsfläche 33 auf. Die erste Reflexionsfläche 31 und die dritte Reflexionsfläche 33 sind rechtwinklig zu der Querrichtung Y orientiert. Die zweite Reflexionsfläche 32 ist rechtwinklig zu der Längsrichtung X orientiert. Die Reflexionsflächen 31, 32, 33 sind Objekte, die Laserstrahlen L reflektieren.

Die Reflexionsflächen 31, 32, 33 der Reflexionseinheiten 21, 22, 23 sind einer Bezugsachse B zugewandt. Die Bezugsachse B verläuft in Vertikalrichtung Z. Die Reflexionsflächen 31, 32, 33 sind in einem gleichen zumindest annähernd gleichen Abstand zu der Bezugsachse B angeordnet. Die Bezugsachse B verläuft zwischen der ersten Reflexionsfläche 31 und der dritten Reflexionsfläche 33. Eine erste Bezugsrichtung von der Bezugsachse B zu der ersten Reflexionsfläche 31 fluchtet mit einer dritten Bezugsrichtung von der Bezugsachse B zu der dritten Reflexionsfläche 33. Eine zweite Bezugsrichtung von der Bezugsachse B zu der zweiten Reflexionsfläche 32 steht rechtwinklig zu der ersten Bezugsrichtung.

Die Vorrichtung weist eine erste Kamera 41, welche auf die erste Reflexionsfläche 31 gerichtet ist, eine zweite Kamera 42, welche auf die zweite Reflexionsfläche 32 gerichtet ist, und eine dritte Kamera 43, welche auf die dritte Reflexionsfläche 33 gerichtet ist, auf. Die Kameras 41, 42, 43 sind ebenfalls an dem Gestell 50 fixiert. Bei den Kameras 41, 42, 43 handelt sich um Kameras, welche dazu eingerichtet sind, Strahlen in einem Wellenlängenbereich zu detektieren, in dem die Laserstrahlen L des Laserscanners 3 liegen. In einer bevorzugten Ausführung ist dies Infrarotwellenlängenbereich. Die Kameras 41, 42, 43 sind somit beispielsweise als Infrarotkameras ausgebildet.

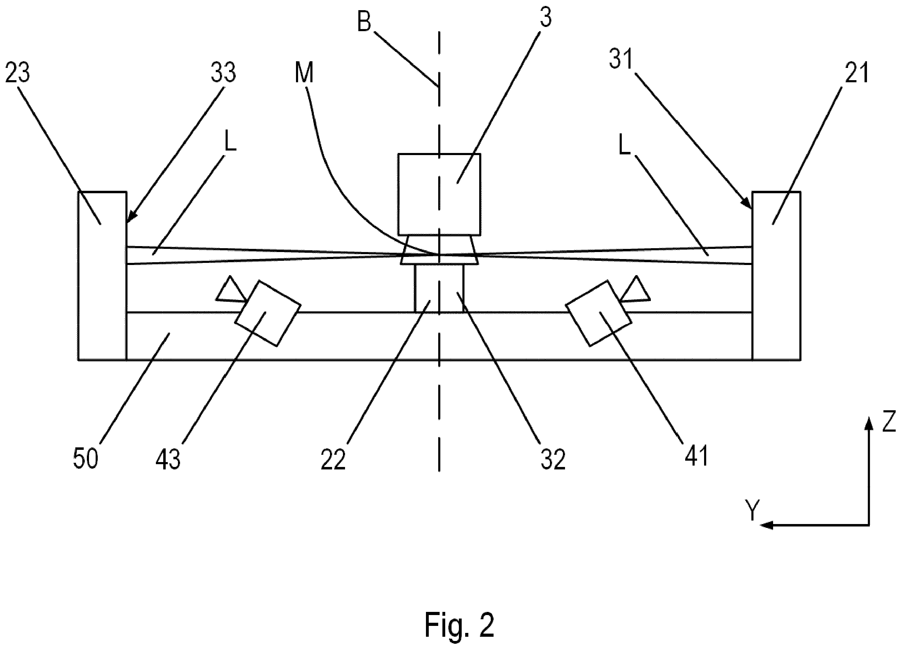

Figur 2 zeigt eine schematische Frontansicht der in Figur 1 gezeigten Vorrichtung zur Kalibrierung einer Scanebene eines Laserscanners 3. Die zweite Kamera 42 ist vorliegend nicht dargestellt. Die Vorrichtung ist relativ zu dem Laserscanner 3 des Fahrzeugs derart ausgerichtet, dass die Bezugsachse B einen Mittelpunkt M des Laserscanners 3 schneidet oder zumindest in unmittelbarer Nähe des Mittelpunkts M verläuft.

Laserstrahlen L des Laserscanners 3 sind auf die Reflexionsflächen 31, 32, 33 der Reflexionseinheiten 21, 22, 23 gerichtet. Die Reflexionsflächen 31, 32, 33 sind derart ausgerichtet, dass die von dem Laserscanner 3 ausgesendeten Laserstrahlen L zu dem Laserscanner 3 reflektiert werden.

Zur Ausrichtung der Vorrichtung relativ zu dem Laserscanner 3 werden eine erste Entfernung des Mittelpunkts M des Laserscanners 3 zu der ersten Reflexionsfläche 31, eine zweite Entfernung des Mittelpunkts M des Laserscanners 3 zu der zweiten Reflexionsfläche 32 und eine dritte Entfernung des Mittelpunkts M des Laserscanners 3 zu der dritten Reflexionsfläche 33 gemessen. Die besagten Entfernungen des Mittelpunkts M des Laserscanners 3 zu den Reflexionsflächen 31, 32, 33 werden dabei mittels Laserstrahlen L gemessen, welche von dem Laserscanner 3 ausgesandt und von den Reflexionsflächen 31, 32, 33 zu dem Laserscanner 3 reflektiert werden.

Die Vorrichtung wird dann relativ zu dem Laserscanner 3 derart positioniert, dass die erste Entfernung, die zweite Entfernung und die dritte Entfernung gleich oder zumindest annähernd gleich sind. Dann schneidet die Bezugsachse B der Vorrichtung den Mittelpunkt M des Laserscanners 3 oder verläuft zumindest in unmittelbarer Nähe des Mittelpunkts M.

Auf jeder der Reflexionsflächen 31, 32, 33 sind jeweils Markierungen zur Darstellung einer Auftreffhöhe eines Laserstrahls L in Vertikalrichtung Z angebracht. Bei den Markierungen handelt es sich beispielsweise um Striche, welche in eine horizontale Richtung verlaufen, und welche in Vertikalrichtung Z versetzt zueinander angeordnet sind. Die Markierungen sind beispielsweise in Form eines Lineals ausgebildet. In einer bevorzugten Ausführung ist die Auflösung am Lineal im Millimeterbereich.

Ein Laserstrahl L trifft in einer ersten Auftreffhöhe in Vertikalrichtung Z auf die erste Reflexionsfläche 31. Ein Laserstrahl L trifft in einer zweiten Auftreffhöhe in Vertikalrichtung Z auf die zweite Reflexionsfläche 32. Ein Laserstrahl L trifft in einer dritten Auftreffhöhe in Vertikalrichtung Z auf die dritte Reflexionsfläche 33.

Die erste Auftreffhöhe wird von der ersten Kamera 41, welche auf die erste Reflexionsfläche 31 gerichtet ist, ermittelt. Die zweite Auftreffhöhe wird von der zweiten Kamera 42, welche auf die zweite Reflexionsfläche 32 gerichtet ist, ermittelt. Die dritte Auftreffhöhe wird von der dritten Kamera 43, welche auf die dritte Reflexionsfläche 33 gerichtet ist, ermittelt.

Die Auftreffhöhen der Laserstrahlen L auf die Reflexionsflächen 31, 32, 33 werden anhand der Markierungen auf den Reflexionsflächen 31, 32, 33 ermittelt. Die Laserstrahlen L sind auf den Reflexionsflächen 31, 32, 33 für die Kameras 41, 42, 43 sichtbar, und die Auftreffhöhen sind jeweils einer Markierung zuordenbar.

Die Laserstrahlen L sind nicht unendlich dünn, sondern weisen eine endliche Breite in Vertikalrichtung Z auf. In einer Ausführung wird als Auftreffhöhe eines Laserstrahls L ein Wert an der Markierung abgelesen, der in Vertikalrichtung Z in der Mitte des Laserstrahls L auf der jeweiligen Reflexionsfläche 31, 32, 33 liegt. Damit wird eine deutlich bessere Genauigkeit der Kalibrierung erreicht.

Die so ermittelten Auftreffhöhen der Laserstrahlen L auf die Reflexionsflächen 31, 32, 33 werden miteinander verglichen. Wenn die Auftreffhöhen gleich sind, so ist die Scanebene des Laserscanners 3 korrekt kalibriert. Wenn die ermittelten Auftreffhöhen der Laserstrahlen L auf die Reflexionsflächen 31, 32, 33 in Vertikalrichtung Z sich unterscheiden, so ist die Scanebene des Laserscanners 3 nicht korrekt kalibriert. In diesem Fall wird eine Justierung des Laserscanners 3 durchgeführt.

### Bezugszeichenliste

- 3: Laserscanner
- 21: erste Reflexionseinheit
- 22: zweite Reflexionseinheit
- 23: dritte Reflexionseinheit
- 31: erste Reflexionsfläche
- 32: zweite Reflexionsfläche
- 33: dritte Reflexionsfläche
- 41: erste Kamera
- 42: zweite Kamera
- 43: dritte Kamera
- 50: Gestell
- B: Bezugsachse
- L: Laserstrahl
- M: Mittelpunkt
- X: Längsrichtung
- Y: Querrichtung
- Z: Vertikalrichtung

## Patentansprüche

1. Vorrichtung zur Kalibrierung einer Scanebene eines Laserscanners (3), insbesondere eines Fahrzeugs,
umfassend mehrere Reflexionseinheiten (21, 22, 23) zur Reflexion eines Laserstrahls (L) des Laserscanners (3),
wobei die Reflexionseinheiten (21, 22, 23) jeweils eine einer Bezugsachse (B) zugewandte Reflexionsfläche (31, 32, 33) aufweisen, und
die Bezugsachse (B) in einer Vertikalrichtung (Z) verläuft, und
auf jeder der Reflexionsflächen (31, 32, 33) jeweils Markierungen zur Darstellung einer Auftreffhöhe eines Laserstrahls (L) in Vertikalrichtung (Z) angebracht sind, und
die erste Reflexionsfläche (31) und die dritte Reflexionsfläche (33) rechtwinklig zu einer Querrichtung (Y) orientiert sind, und
die zweite Reflexionsfläche (32) rechtwinklig zu einer Längsrichtung (X) orientiert ist, und die Längsrichtung (X) rechtwinklig zu der Vertikalrichtung (Z) verläuft, und
die Querrichtung (Y) rechtwinklig zu der Vertikalrichtung (Z) und rechtwinklig zu der Längsrichtung (X) verläuft, **dadurch gekennzeichnet, dass** die Vorrichtung eine erste Kamera (41), welche auf die erste Reflexionsfläche (31) gerichtet ist, eine zweite Kamera (42), welche auf die zweite Reflexionsfläche (32) gerichtet ist, und
eine dritte Kamera (43), welche auf die dritte Reflexionsfläche (33) gerichtet ist, aufweist, und dass
die Kameras (41, 42, 43) dazu eingerichtet sind, Strahlen in einem Wellenlängenbereich zu detektieren, in dem die Laserstrahlen (L) des Laserscanners (3) liegen.

2. Vorrichtung nach einem der vorangegangenen Ansprüche, **dadurch gekennzeichnet, dass** die Reflexionseinheiten (21, 22, 23) an einem Gestell (50) fixiert sind, und dass
die Reflexionseinheiten (21, 22, 23) relativ zueinander sowie relativ zu dem Gestell (50) unbeweglich sind.

3. Vorrichtung nach einem der vorangegangenen Ansprüche, **dadurch gekennzeichnet, dass** die Reflexionsflächen (31, 32, 33) in einem gleichen Abstand zu der Bezugsachse (B) angeordnet sind.

4. Vorrichtung nach einem der vorangegangenen Ansprüche, **dadurch gekennzeichnet, dass** die Bezugsachse (B) zwischen der ersten Reflexionsfläche (31) und der dritten Reflexionsfläche (33) verläuft.

5. Vorrichtung nach einem der vorangegangenen Ansprüche, **dadurch gekennzeichnet, dass** eine erste Bezugsrichtung von der Bezugsachse (B) zu der ersten Reflexionsfläche (31) mit einer dritten Bezugsrichtung von der Bezugsachse (B) zu der dritten Reflexionsfläche (33) fluchtet, und dass
eine zweite Bezugsrichtung von der Bezugsachse (B) zu der zweiten Reflexionsfläche (32) rechtwinklig zu der ersten Bezugsrichtung steht.

6. Verfahren zur Kalibrierung einer Scanebene eines Laserscanners (3), insbesondere eines Fahrzeugs, mittels einer Vorrichtung nach einem der vorangegangenen Ansprüche,
**dadurch gekennzeichnet, dass**
die Vorrichtung relativ zu dem Laserscanner (3) derart ausgerichtet wird, dass die Bezugsachse (B) einen Mittelpunkt (M) des Laserscanners (3) schneidet;
Laserstrahlen (L) des Laserscanners (3) auf die Reflexionsflächen (31, 32, 33) der Reflexionseinheiten (21, 22, 23) gerichtet werden;
Auftreffhöhen der Laserstrahlen (L) auf die Reflexionsflächen (31, 32, 33) in Vertikalrichtung (Z) ermittelt werden;
wenn die ermittelten Auftreffhöhen der Laserstrahlen (L) auf die Reflexionsflächen (31, 32, 33) in Vertikalrichtung (Z) sich unterscheiden
eine Justierung des Laserscanners (3) durchgeführt wird, und dass
eine erste Auftreffhöhe eines Laserstrahls (L) auf die erste Reflexionsfläche (31) in Vertikalrichtung (Z) von einer ersten Kamera (41), welche auf die erste Reflexionsfläche (31) gerichtet ist, ermittelt wird;
eine zweite Auftreffhöhe eines Laserstrahls (L) auf die zweite Reflexionsfläche (32) in Vertikalrichtung (Z) von einer zweiten Kamera (42), welche auf die zweite Reflexionsfläche (32) gerichtet ist, ermittelt wird;
eine dritte Auftreffhöhe eines Laserstrahls (L) auf die dritte Reflexionsfläche (33) in Vertikalrichtung (Z) von einer dritten Kamera (43), welche auf die dritte Reflexionsfläche (33) gerichtet ist, ermittelt wird.

7. Verfahren nach Anspruch 6, **dadurch gekennzeichnet, dass**
zur Ausrichtung der Vorrichtung relativ zu dem Laserscanner (3)
eine erste Entfernung des Mittelpunkts (M) des Laserscanners (3) zu der ersten Reflexionsfläche (31), eine zweite Entfernung des Mittelpunkts (M) des Laserscanners (3) zu der zweiten Reflexionsfläche (32) und eine dritte Entfernung des Mittelpunkts (M) des Laserscanners (3) zu der dritten Reflexionsfläche (33) gemessen werden, und dass
die Vorrichtung relativ zu dem Laserscanner (3) derart positioniert wird, dass
die erste Entfernung, die zweite Entfernung und die dritte Entfernung gleich oder zumindest annähernd gleich sind.

8. Verfahren nach Anspruch 7, **dadurch gekennzeichnet, dass**
die Entfernungen des Mittelpunkts (M) des Laserscanners (3) zu den Reflexionsflächen (31, 32, 33) mittels Laserstrahlen (L) des Laserscanners (3) gemessen werden, welche von den Reflexionsflächen (31, 32, 33) reflektiert werden.

## Claims

1. Device for calibrating a scanning plane of a laser scanner (3), in particular of a vehicle,
said device comprising a plurality of reflection units (21, 22, 23) for reflecting a laser beam (L) of the laser scanner (3),
the reflection units (21, 22, 23) each having a reflection surface (31, 32, 33) that faces towards a reference axis (B), and
the reference axis (B) running in a vertical direction (Z), and
markings for illustrating an impinging height of a laser beam (L) in the vertical direction (Z) being affixed to each of the reflection surfaces (31, 32, 33), and
the first reflection surface (31) and the third reflection surface (33) being oriented perpendicularly to a transverse direction (Y), and
the second reflection surface (32) being oriented perpendicularly to a longitudinal direction (X), and
the longitudinal direction (X) running perpendicularly to the vertical direction (Z), and
the transverse direction (Y) running perpendicularly to the vertical direction (Z) and perpendicularly to the longitudinal direction (X),
**characterised in that**
the device has a first camera (41) which is aimed at the first reflection surface (31),
a second camera (42) which is aimed at the second reflection surface (32), and
a third camera (43) which is aimed at the third reflection surface (33), and **in that**
the cameras (41, 42, 43) are configured to detect beams in a wavelength range in which the laser beams (L) of the laser scanner (3) are positioned.

2. Device according to any of the preceding claims,
**characterised in that**
the reflection units (21, 22, 23) are fastened to a frame (50), and **in that**
the reflection units (21, 22, 23) are immovable relative to one another and relative to the frame (50).

3. Device according to any of the preceding claims,
**characterised in that**
the reflection surfaces (31, 32, 33) are arranged at the same spacing from the reference axis (B).

4. Device according to any of the preceding claims,
**characterised in that**
the reference axis (B) runs between the first reflection surface (31) and the third reflection surface (33).

5. Device according to any of the preceding claims,
**characterised in that**
a first reference direction from the reference axis (B) to the first reflection surface (31) is aligned with a third reference direction from the reference axis (B) to the third reflection surface (33), and **in that**
a second reference direction from the reference axis (B) to the second reflection surface (32) is perpendicular to the first reference direction.

6. Method for calibrating a scanning plane of a laser scanner (3), in particular of a vehicle, by means of a device according to any of the preceding claims,
**characterised in that**
the device is oriented relative to the laser scanner (3) in such a way that the reference axis (B) intersects a centre point (M) of the laser scanner (3);
laser beams (L) of the laser scanner (3) are aimed at the reflection surfaces (31, 32, 33) of the reflection units (21, 22, 23);
impinging heights of the laser beams (L) on the reflection surfaces (31, 32, 33) in the vertical direction (Z) are established;
if the established impinging heights of the laser beams (L) on the reflection surfaces (31, 32, 33) in the vertical direction (Z) differ,
the laser scanner (3) is adjusted, and **in that**
a first impinging height of a laser beam (L) on the first reflection surface (31) in the vertical direction (Z) is established by a first camera (41) which is aimed at the first reflection surface (31);
a second impinging height of a laser beam (L) on the second reflection surface (32) in the vertical direction (Z) is established by a second camera (42) which is aimed at the second reflection surface (32);
a third impinging height of a laser beam (L) on the third reflection surface (33) in the vertical direction (Z) is established by a third camera (43) which is aimed at the third reflection surface (33).

7. Method according to claim 6,
**characterised in that**
in order to orient the device relative to the laser scanner (3),
a first distance from the centre point (M) of the laser scanner (3) to the first reflection surface (31), a second distance from the centre point (M) of the laser scanner (3) to the second reflection surface (32) and a third distance from the centre point (M) of the laser scanner (3) to the third reflection surface (33) are measured, and **in that**
the device is positioned relative to the laser scanner (3) in such a way that
the first distance, the second distance and the third distance are the same or at least approximately the same.

8. Method according to claim 7,
**characterised in that**
the distances from the centre point (M) of the laser scanner (3) to the reflection surfaces (31, 32, 33) are measured by means of laser beams (L) of the laser scanner (3) that are reflected by the reflection surfaces (31, 32, 33).

## Revendications

1. Dispositif pour l'étalonnage d'un plan de balayage d'un scanner laser (3), en particulier d'un véhicule, comprenant plusieurs unités de réflexion (21, 22, 23) pour la réflexion d'un faisceau laser (L) du scanner laser (3), où les unités de réflexion (21, 22, 23) présentent chacune une surface de réflexion (31, 32, 33) orientée vers un axe de référence (B), et l'axe de référence (B) s'étend dans une direction verticale (Z), et sur chacune des surfaces de réflexion (31, 32, 33), des marquages pour la représentation d'une hauteur d'impact d'un faisceau laser (L) dans la direction verticale (Z) sont disposés, et la première surface de réflexion (31) et la troisième surface de réflexion (33) sont orientées perpendiculairement à une direction transversale (Y), et la deuxième surface de réflexion (32) est orientée perpendiculairement à une direction longitudinale (X), et la direction longitudinale (X) s'étend perpendiculairement à la direction verticale (Z), et la direction transversale (Y) s'étend perpendiculairement à la direction verticale (Z) et perpendiculairement à la direction longitudinale (X), **caractérisé en ce que** le dispositif comprend une première caméra (41), qui est dirigée vers la première surface de réflexion (31), une deuxième caméra (42), qui est dirigée vers la deuxième surface de réflexion (32), et une troisième caméra (43), qui est dirigée vers la troisième surface de réflexion (33), et que les caméras (41, 42, 43) sont agencées pour détecter des rayons dans un domaine de longueur d'onde dans lequel se trouvent les faisceaux laser (L) du scanner laser (3).

2. Dispositif selon l'une des revendications précédentes, **caractérisé en ce que** les unités de réflexion (21, 22, 23) sont fixées sur un bâti (50), et que les unités de réflexion (21, 22, 23) sont immobiles les unes par rapport aux autres ainsi que par rapport au bâti (50).

3. Dispositif selon l'une des revendications précédentes, **caractérisé en ce que** les surfaces de réflexion (31, 32, 33) sont agencées à une même distance de l'axe de référence (B).

4. Dispositif selon l'une des revendications précédentes, **caractérisé en ce que** l'axe de référence (B) s'étend entre la première surface de réflexion (31) et la troisième surface de réflexion (33).

5. Dispositif selon l'une des revendications précédentes, **caractérisé en ce qu'**une première direction de référence de l'axe de référence (B) vers la première surface de réflexion (31) est alignée avec une troisième direction de référence de l'axe de référence (B) vers la troisième surface de réflexion (33), et qu'une deuxième direction de référence de l'axe de référence (B) vers la deuxième surface de réflexion (32) est perpendiculaire à la première direction de référence.

6. Procédé pour l'étalonnage d'un plan de balayage d'un scanner laser (3), en particulier d'un véhicule, au moyen d'un dispositif selon l'une des revendications précédentes, **caractérisé en ce que**
le dispositif est aligné par rapport au scanner laser (3) de sorte que l'axe de référence (B) coupe un centre (M) du scanner laser (3);
des faisceaux laser (L) du scanner laser (3) sont dirigés vers les surfaces de réflexion (31, 32, 33) des unités de réflexion (21, 22, 23) ;
des hauteurs d'impact des faisceaux laser (L) sur les surfaces de réflexion (31, 32, 33) dans la direction verticale (Z) sont déterminées ;
lorsque les hauteurs d'impact déterminées des faisceaux laser (L) sur les surfaces de réflexion (31, 32, 33) dans la direction verticale (Z) diffèrent
un ajustement du scanner laser (3) est effectué, et qu'une première hauteur d'impact d'un faisceau laser (L) sur la première surface de réflexion (31) dans la direction verticale (Z) est déterminée par une première caméra (41), qui est dirigée vers la première surface de réflexion (31); une deuxième hauteur d'impact d'un faisceau laser (L) sur la deuxième surface de réflexion (32) dans la direction verticale (Z) est déterminée par une deuxième caméra (42), qui est dirigée vers la deuxième surface de réflexion (32); une troisième hauteur d'impact d'un faisceau laser (L) sur la troisième surface de réflexion (33) dans la direction verticale (Z) est déterminée par une troisième caméra (43), qui est dirigée vers la troisième surface de réflexion (33).

7. Procédé selon la revendication 6, **caractérisé en ce que** pour l'alignement du dispositif par rapport au scanner laser (3) une première distance du centre (M) du scanner laser (3) à la première surface de réflexion (31), une deuxième distance du centre (M) du scanner laser (3) à la deuxième surface de réflexion (32) et une troisième distance du centre (M) du scanner laser (3) à la troisième surface de réflexion (33) sont mesurées, et que le dispositif est positionné par rapport au scanner laser (3) de sorte que la première distance, la deuxième distance et la troisième distance sont égales ou au moins approximativement égales.

8. Procédé selon la revendication 7, **caractérisé en ce que** les distances du centre (M) du scanner laser (3) aux surfaces de réflexion (31, 32, 33) sont mesurées au moyen de faisceaux laser (L) du scanner laser (3), lesquels sont réfléchis par les surfaces de réflexion (31, 32, 33).
